# EUROPEAN PATENT SPECIFICATION

(11) **EP 2 929 387 B1**
(45) Date of publication and mention of the grant of the patent: **31.10.2018**
(21) Application number: 13802840.2
(22) Date of filing: 03.12.2013
(51) Int. Cl.: G02B 6/44, G02B 6/255

(54) **FIBER OPTIC MODULES WITH SPLICE HOLDER AND FIBER MANAGEMENT FEATURES**
FASEROPTISCHE MODULE MIT SPLEISSHALTERUNG UND FASERMANAGEMENT
MODULES À FIBRES OPTIQUES COMPORTANT DES ÉLÉMENTS DE SUPPORT D'ÉPISSURE ET DE GESTION DE FIBRES

(30) Priority: 07.12.2012 US 201261734646 P; 15.03.2013 US 201361791341 P
(43) Date of publication of application: 14.10.2015
(73) Proprietor: Corning Optical Communications LLC, Hickory, NC 28601 (US)
(72) Inventor: BLACKWELL, Chois, Alven, Jr., North Richland Hills, TX 76180 (US); COX, Terry Dean, Fort Worth, TX 76131 (US)
(74) Representative: Sturm, Christoph
(86) International application number: PCT/US2013/072706
(87) International publication number: WO 2014/088980

(56) References cited:
- WO-A1-2011/112764
- US-A1- 2007 172 192
- US-A1- 2010 061 693
- US-A1- 2011 268 415
- US-B1- 6 259 851

## Description

### BACKGROUND

### Field of the Disclosure

The technology of the disclosure relates to fiber optic modules and fiber optic modules that have fiber management features mounted therein.

### Technical Background

Benefits of optical fiber include extremely wide bandwidth and low noise transmission. Because of these advantages, optical fiber is increasingly being used for a variety of applications, including but not limited to, broadband voice, video, and data transmission. Fiber optic networks employing optical fiber are being developed and used to deliver voice, video, and data transmissions to subscribers over both private and public networks. These fiber optic networks often include separated connection points linking optical fibers to provide "live fiber" from one connection point to another connection point. In this regard, fiber optic connection equipment, which is also referred to as fiber optic equipment, is located in data distribution centers or central offices to support interconnections.

The fiber optic equipment is customized based on application need. The fiber optic equipment is typically included in housings that are mounted in equipment racks for organizational purposes and to optimize use of space. One example of such fiber optic equipment is a fiber optic module. A fiber optic module is designed to provide cable-to-cable fiber optic connections and manage the polarity of fiber optic cable connections. A fiber optic module may be mounted to a chassis or housing which is then mounted inside an equipment rack or cabinet. The fiber optic modules may also contain components including optical components. Due to increasing bandwidth needs and the need to provide a larger number of connections in data centers for increased revenue generating opportunities, a need exists to provide fiber optic modules that can facilitate larger numbers of fiber optic connections in a given space.

In order to facilitate larger numbers of fiber optic connections in a given space, fiber optic equipment supporting high-density fiber optic modules that support a high fiber optic connection density and bandwidth in a 1-U or 1-RU space (U and RU hereinafter referred to as "U") may be used. In this environment, high-density fiber optic modules have a limited form factor in order to fit in the small 1-U space, which limits the interior space of the high-density fiber optic modules. It may be advantageous to maximize the limited interior space of the high-density fiber optic modules. The publication US2011/0268415 A1 discloses a fiber optic module according to the preamble of claim 1.

### SUMMARY OF THE DETAILED DESCRIPTION

The invention provides a fiber optic module according to claim 1. Embodiments disclosed in the detailed description include high-density fiber optic modules having fiber management features. A high-density fiber optic module is disclosed. The high-density fiber optic module comprises an interior. The high-density fiber optic module also comprises at least one adapter disposed in one end of the fiber optic module, having a fiber optic connector configured to connect to one or more optical fibers. The high-density fiber optic module further comprises a splice holder assembly positioned in the interior of the fiber optic module. The splice holder assembly has a single fiber splice holder assembly and a ribbon fiber splice holder feature mounted on a common base.

The splice holder assembly is configured to provide fiber management for the one or more optical fibers within the interior of the fiber optic module. A plurality of additional fiber management features may be used in one embodiment. In one embodiment, the at least one fiber management feature may be configured to provide fiber management for a fiber harness spliced to a ribbon cable by a first ribbon fiber splice. In another embodiment, the at least one fiber management feature may configured to provide fiber management for a plurality of fiber pigtails.

The high-density fiber optic modules disclosed herein provide larger numbers of fiber optic connections in a given space. The embodiments disclosed herein allow the interior space of the high-density fiber optic modules to be maximized, allowing for the high-density fiber optic module to support splicing of pre-connectorized pigtail fibers within the high-density fiber optic module. In this manner, the high-density fiber optic module can retain its limited form factor and other functionalities while also adding the functionality of a fiber splice tray. Using the embodiments disclosed herein allows a user to splice fiber optic pigtails to trunk optical fibers while maintaining the port density of the high-density fiber optic module.

Additional features and advantages will be set forth in the detailed description which follows, and in part will be readily apparent to those skilled in the art from that description or recognized by practicing the embodiments as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE FIGURES

**FIG. 1** is a front perspective view of an exemplary fiber optic equipment rack with an installed exemplary 1-U size chassis supporting high-density fiber optic modules to provide a given fiber optic connection density and bandwidth capability, according to one embodiment;
**FIG. 2** is a rear perspective close-up view of the chassis of **FIG. 1** with fiber optic modules installed in fiber optic equipment trays installed in the fiber optic equipment;
**FIG. 3** is a front perspective view of one fiber optic equipment tray with installed fiber optic modules configured to be installed in the chassis of **FIG. 1**;
**FIG. 4** illustrates a front view of an exemplary fiber optic module to illustrate the form factor of the fiber optic module;
**FIG. 5A** is a front, top perspective view of an exemplary fiber optic module with a pushrod, according to an embodiment;
**FIG. 5B** is a front, top perspective view of an exemplary fiber optic module with a partially exploded view of the pushrod and a compression spring, according to one embodiment;
**FIG. 6** is a front, top perspective view of the exemplary fiber optic module of **FIG. 5A** with the cover removed showing the interior of the exemplary fiber optic module;
**FIG. 7** is a detail perspective view of an exemplary embodiment of the pushrod of the exemplary fiber optic module of **FIG. 5A**;
**FIG. 8** is a close-up view of a portion of the back end of the exemplary fiber optic module of **FIG. 5A** showing a pinch grip and the pushrod in an activated state with the deactivated state shown in background;
**FIGS. 9A-9C** are detail views of an exemplary pushrod;
**FIG. 10** is a detail view of a portion of an exemplary fiber optic module showing the pushrod and pinch grip;
**FIG. 11** is a detail view of a portion of an exemplary fiber optic module showing the pushrod and pinch grip;
**FIG. 12** is a top view of an exemplary fiber optic module showing exemplary fiber management features;
**FIG. 13A-13D** are detail views of an exemplary splice holder;
**FIG. 14** is a top view of the exemplary fiber optic module of **FIG. 12** with a ribbon harness and ribbon fiber splice;
**FIG. 15** is a top view of the exemplary fiber optic module of **FIG. 12** with single fiber pigtails;
**FIG. 16A** illustrates one embodiment of a ribbon harness that may be employed in the fiber optic modules disclosed herein; and
**FIG. 16B** illustrates one embodiment of fiber pigtails that may be employed in the fiber optic modules disclosed herein.

### DETAILED DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein. Whenever possible, like reference numbers will be used to refer to like components or parts.

Embodiments disclosed in the detailed description include high-density fiber optic modules having fiber management features. A high-density fiber optic module is disclosed. The high-density fiber optic module comprises an interior. The high-density fiber optic module also comprises at least one adapter disposed in one end of the fiber optic module, having a fiber optic connector configured to connect to one or more optical fibers. The high-density fiber optic module further comprises a splice holder assembly positioned in the interior of the fiber optic module. The splice holder assembly has a single fiber splice holder assembly and a ribbon fiber splice holder feature mounted on a common base.

The splice holder assembly is configured to provide fiber management for the one or more optical fibers within the interior of the fiber optic module. A plurality of additional fiber management features may be used in one embodiment. In one embodiment, the at least one fiber management feature may be configured to provide fiber management for a fiber harness spliced to a ribbon cable by a first ribbon fiber splice. In another embodiment, the at least one fiber management feature may configured to provide fiber management for a plurality of fiber pigtails.

The high-density fiber optic modules disclosed herein provide larger numbers of fiber optic connections in a given space. The embodiments disclosed herein allow the interior space of the high-density fiber optic modules to be maximized, allowing for the high-density fiber optic module to support splicing of pre-connectorized pigtail fibers within the high-density fiber optic module. In this manner, the high-density fiber optic module can retain its limited form factor and other functionalities while also adding the functionality of a fiber splice tray. Using the embodiments disclosed herein allows a user to splice fiber optic pigtails to trunk optical fibers while maintaining the port density of the high-density fiber optic module.

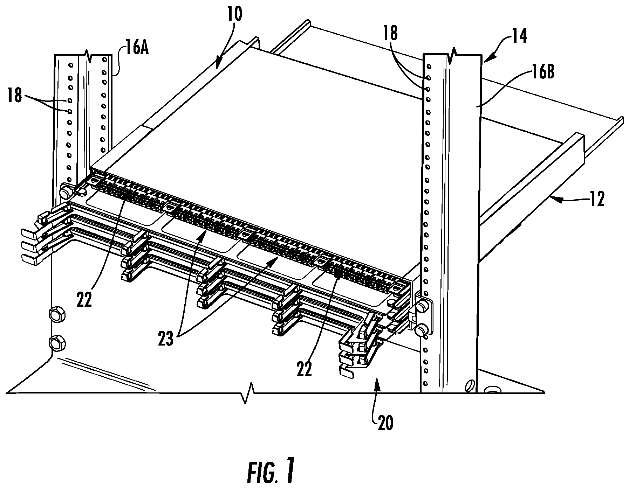

Before discussing in detail the embodiments of the fiber management features provided in the interior of high-density fiber optic modules, a brief discussion of high-density fiber optic modules may be beneficial. In this regard, **FIG. 1** illustrates exemplary 1-U or 1-RU size fiber optic equipment **10** from a front perspective view. The fiber optic equipment **10** supports high-density fiber optic modules that support a high fiber optic connection density and bandwidth in a 1-U or 1-RU space (U and RU hereinafter referred to as "U"), as will be described in greater detail below. The fiber optic equipment **10** may be provided at a data distribution center or central office to support cable-to-cable fiber optic connections and to manage a plurality of fiber optic cable connections. As will be described in greater detail below, the fiber optic equipment **10** has one or more fiber optic equipment trays that each support one or more fiber optic modules. However, the fiber optic equipment **10** could also be adapted to support one or more fiber optic patch panels or other fiber optic equipment that supports fiber optic components and connectivity.

The fiber optic equipment **10** includes a fiber optic equipment chassis **12** ("chassis **12**"). The chassis **12** is shown as being installed in a fiber optic equipment rack **14**. The fiber optic equipment rack **14** contains two vertical rails **16A, 16B** that extend vertically and include a series of apertures **18** for facilitating attachment of the chassis **12** inside the fiber optic equipment rack **14**. The chassis **12** is attached and supported by the fiber optic equipment rack **14** in the form of shelves that are stacked on top of each other within the vertical rails **16A, 16B.** As illustrated, the chassis **12** is attached to the vertical rails **16A, 16B**. The fiber optic equipment rack **14** may support 1-U or 1-RU sized shelves, with "U" or "RU" equal to a standard 1.75 inches (44.5 mm) in height and nineteen (19) inches (482.6 mm) in width. In certain applications, the width of "U" may be twenty-three (23) inches (584.2 mm). In this embodiment, the chassis **12** is 1-U in size; however, the chassis **12** could be provided in a size greater than 1-U as well.

As will be discussed in greater detail later below, the fiber optic equipment **10** includes a plurality of extendable fiber optic equipment trays **20** that each carries one or more fiber optic modules **22**. The chassis **12** and fiber optic equipment trays **20** support fiber optic modules **22** that support a high fiber optic connection density and a high number of bandwidth connections in a given space, including in a 1-U space. **FIG. 1** shows exemplary fiber optic components **23** disposed in the fiber optic modules **22** that support fiber optic connections. For example, the fiber optic components **23** may be fiber optic adapters or fiber optic connectors. As will also be discussed in greater detail later below, the fiber optic modules **22** in this embodiment can be provided such that the fiber optic components **23** can be disposed through at least eighty-five percent (85%) of the width of the front end **72** or face of the fiber optic module **22**, as an example. This fiber optic module **22** configuration may provide a front opening of approximately 90 millimeters (mm) or less wherein fiber optic components **23** can be disposed through the front opening and at a fiber optic connection density of at least one fiber optic connection per 7.0 mm of width of the front opening of the fiber optic modules **22** for simplex or duplex fiber optic components **23**. In this example, six (6) duplex or twelve (12) simplex fiber optic components **23** may be installed in each fiber optic module **22**. The fiber optic equipment trays **20** in this embodiment support up to four (4) of the fiber optic modules **22** in approximately the width of a 1-U space, and three (3) fiber optic equipment trays **20** in the height of a 1-U space for a total of twelve (12) fiber optic modules **22** in a 1-U space. Thus, for example, if six (6) duplex fiber optic components 23 were disposed in each of the twelve (12) fiber optic modules **22** installed in fiber optic equipment trays **20** of the chassis **12** as illustrated in **FIG. 1**, a total of one hundred forty-four (144) fiber optic connections, or seventy-two (72) duplex channels (i.e., transmit and receive channels), would be supported by the chassis **12** in a 1-U space. If five (5) duplex fiber optic adapters are disposed in each of the twelve (12) fiber optic modules **22** installed in fiber optic equipment trays **20** of the chassis **12**, a total of one hundred twenty (120) fiber optic connections, or sixty (60) duplex channels, would be supported by the chassis **12** in a 1-U space. The chassis **12** also supports at least ninety-eight (98) fiber optic components in a 1-U space wherein at least one of the fiber optic components is a simplex or duplex fiber optic component.

If multi-fiber fiber optic components were installed in the fiber optic modules **22**, such as Multiple-Fiber Push-on/Pull-off (MPO) components for example, higher fiber optic connection density and bandwidths would be possible over other chassis **12** that use similar fiber optic components. For example, if up to four (4) twelve (12) fiber MPO fiber optic components were disposed in each fiber optic module **22**, and twelve (12) of the fiber optic modules **22** were disposed in the chassis **12** in a 1-U space, the chassis **12** would support up to five hundred seventy-six (576) fiber optic connections in a 1-U space. If up to four (4) twenty-four (24) fiber MPO fiber optic components were disposed in each fiber optic module **22**, and twelve (12) of the fiber optic modules **22** were disposed in the chassis **12** in a 1-U space, the chassis **12** would support up to one thousand one hundred fifty-two (1152) fiber optic connections in a 1-U space.

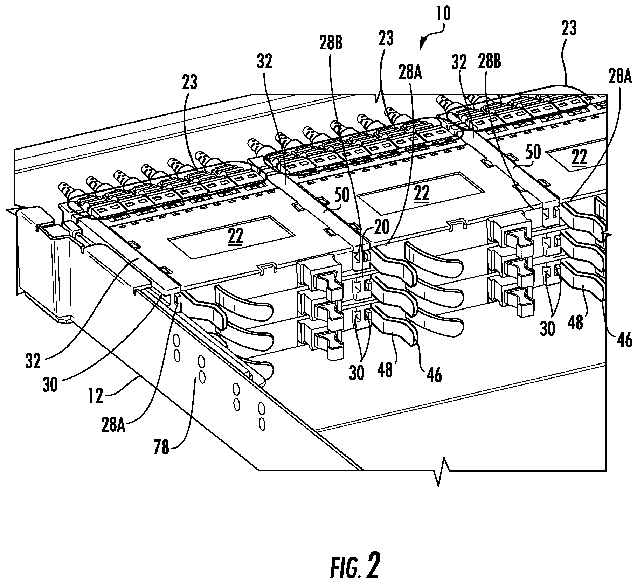

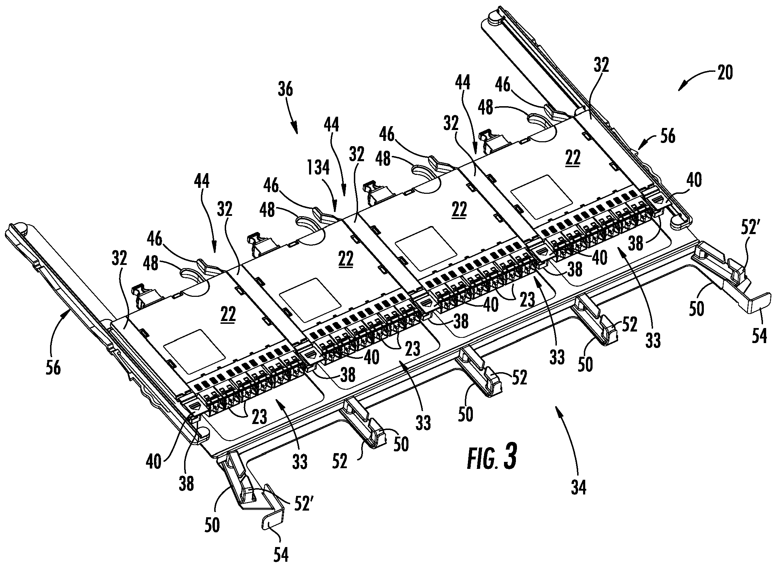

**FIG. 2** is a rear perspective close-up view of the chassis **12** of **FIG. 1** with fiber optic modules **22** loaded with fiber optic components **23** and installed in fiber optic equipment trays **20** installed in the chassis **12**. Module rails **28A**, **28B** are disposed on each side of each fiber optic module **22**. The module rails **28A**, **28B** are configured to be inserted within tray channels **30** of module rail guides **32** disposed in the fiber optic equipment tray **20**, as illustrated in more detail in **FIG. 3**. Note that any number of module rail guides **32** can be provided. The fiber optic module **22** can be installed from both a front end **34** and a rear end **36** of the fiber optic equipment tray **20** in this embodiment. If it is desired to install the fiber optic module **22** in the fiber optic equipment tray **20** from the rear end **36**, a front end **33** of the fiber optic module **22** can be inserted into the rear end **36** of the fiber optic equipment tray **20**. More specifically, the front end **33** of the fiber optic module **22** is inserted into the tray channels **30** of the module rail guides **32**. The fiber optic module **22** can then be pushed forward within the tray channels **30** until the fiber optic module **22** reaches the front end **34** of the module rail guides **32**. The fiber optic modules **22** can be moved towards the front end **34** until the fiber optic modules **22** reach a stop or locking feature disposed in the front end **34**.

The fiber optic module **22** can be locked into place in the fiber optic equipment tray **20** by pushing the fiber optic module **22** forward to the front end **34** of the fiber optic equipment tray **20**. A locking feature in the form of a front stop **38** is disposed in the module rail guides **32**, as illustrated in **FIG. 3**. The front stop **38** prevents the fiber optic module **22** from extending beyond the front end **34**. When it is desired to remove a fiber optic module **22** from the fiber optic equipment tray **20**, a front module tab **40** also disposed in the module rail guides **32** and coupled to the front stop **38** can be pushed downward to contact the front stop **38**. As a result, the front stop **38** will move downward away from the fiber optic module **22** such that the fiber optic module **22** is not obstructed from being pulled forward. The fiber optic module **22**, and in particular its module rails **28A, 28B** (**FIG. 2**), can be pulled forward along the module rail guides **32** to remove the fiber optic module **22** from the fiber optic equipment tray **20**.

The fiber optic module **22** can also be removed from the rear end **36** of the fiber optic equipment tray **20**. To remove the fiber optic module **22** from the rear end **36** of the fiber optic equipment tray **20**, a latch **44** is disengaged by pushing a lever **46** (see **FIGS. 2** and **3**) inward towards the fiber optic module **22** to release the latch **44** from the module rail guide **32**. To facilitate pushing the lever **46** inward towards the fiber optic module **22**, a finger hook **48** is provided adjacent to the lever **46** so the lever **46** can easily be squeezed into the finger hook **48** by a thumb and an index finger.

With continuing reference to **FIG. 3**, the fiber optic equipment tray **20** may also contain extension members **50**. Routing guides **52** may be conveniently disposed on the extension members **50** to provide routing for optical fibers or fiber optic cables connected to fiber optic components **23** disposed in the fiber optic modules **22** (**FIG. 3**). The routing guides **52'** on the ends of the fiber optic equipment tray **20** may be angled with respect to the module rail guides **32** to route optical fibers or fiber optic cables at an angle to the sides of the fiber optic equipment tray **20**. Pull tabs **54** may also be connected to the extension members **50** to provide a means to allow the fiber optic equipment tray **20** to easily be pulled out from and pushed into the chassis **12**.

As illustrated in **FIG. 3**, the fiber optic equipment tray **20** also contains tray rails **56**. The tray rails **56** are configured to be received in tray guides **58** disposed in the chassis **12** to retain and allow the fiber optic equipment trays **20** to move in and out of the chassis **12**. The fiber optic equipment trays **20** can be moved in and out of the chassis **12** by their tray rails **56** moving within the tray guides **58**. In this manner, the fiber optic equipment trays **20** can be independently movable about the tray guides **58** in the chassis **12**.

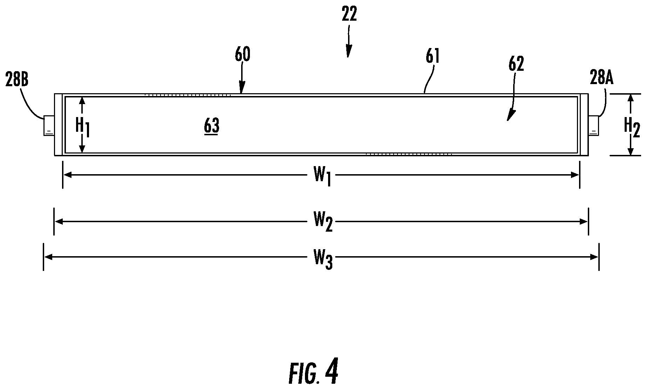

**FIG. 4** illustrates a front view of the fiber optic module **22** without loaded fiber optic components **23** in a front side **60** of a main body **61** of the fiber optic module **22** to further illustrate the form factor of the fiber optic module **22**. A front opening **62** is disposed through the front side **60** of the main body **61** to receive the fiber optic components **23**. An internal chamber **63** disposed inside the main body **61** is configured to receive or retain optical fibers or a fiber optic cable harness, The greater the width **W₁** of the front opening **62**, the greater the number of fiber optic components **23** that may be disposed in the fiber optic module **22**. Greater numbers of fiber optic components **23** equates to more fiber optic connections, which supports higher fiber optic connectivity and bandwidth. However, the larger the width **W₁** of the front opening **62**, the greater the area required to be provided in the chassis **12** for the fiber optic module **22**. Thus, in this embodiment, the width **W₁** of the front opening **62** is designed to be at least eighty-five percent (85%) of the width **W₂** of the front side **60** of the main body **61** of the fiber optic module **22**. The greater the percentage of the width **W₁** to width **W₂**, the larger the area provided in the front opening **62** to receive fiber optic components **23** without increasing width **W₂**. Width **W₃**, the overall width of the fiber optic module **22**, may be 86.6 mm or 3.5 inches (88.9 mm) in this embodiment. As previously discussed, the fiber optic module **22** is designed such that four (4) fiber optic modules **22** can be disposed in a 1-U width space in the fiber optic equipment tray **20** in the chassis **12**. The width of the chassis **12** is designed to accommodate a 1-U space width in this embodiment.

With three (3) fiber optic equipment trays **20** disposed in the 1-U height of the chassis **12**, a total of twelve (12) fiber optic modules **22** can be supported in a given 1-U space. Supporting up to twelve (12) fiber optic connections per fiber optic module **22** as illustrated in the chassis **12** in **FIG. 1** equates to the chassis **12** supporting up to one hundred forty-four (144) fiber optic connections, or seventy-two (72) duplex channels, in a 1-U space in the chassis **12** (i.e., twelve (12) fiber optic connections X twelve (12) fiber optic modules **22** in a 1-U space). Thus, the chassis **12** is capable of supporting up to one hundred forty-four (144) fiber optic connections in a 1-U space by twelve (12) simplex or six (6) duplex fiber optic adapters being disposed in the fiber optic modules **22**. Supporting up to ten (10) fiber optic connections per fiber optic module **22** equates to the chassis **12** supporting one hundred twenty (120) fiber optic connections, or sixty (60) duplex channels, in a 1-U space in the chassis **12** (i.e., ten (10) fiber optic connections X twelve (12) fiber optic modules **22** in a 1-U space). Thus, the chassis **12** is also capable of supporting up to one hundred twenty (120) fiber optic connections in a 1-U space by ten (10) simplex or five (5) duplex fiber optic adapters being disposed in the fiber optic modules **22**.

This embodiment of the chassis **12** and fiber optic module **22** disclosed herein can support a fiber optic connection density within a 1-U space wherein the area occupied by the fiber optic component **23** in twelve (12) fiber optic modules **22** in a 1-U space represents at least fifty percent (50%) of the total fiber optic equipment rack **14** area in a 1-U space (see **FIG. 1**). In the case of twelve (12) fiber optic modules **22** provided in a 1-U space in the chassis **12**, the 1-U space is comprised of the fiber optic components **23** occupying at least seventy-five percent (75%) of the area of the front side **60** of the fiber optic module **22**.

Two (2) duplexed optical fibers to provide one (1) transmission/reception pair can allow for a data rate of ten (10) Gigabits per second in half-duplex mode or twenty (20) Gigabits per second in full-duplex mode. Thus, with the above-described embodiment, providing at least seventy-two (72) duplex transmission and reception pairs in a 1-U space employing at least one duplex or simplex fiber optic component can support a data rate of at least seven hundred twenty (720) Gigabits per second in half-duplex mode in a 1-U space or at least one thousand four hundred forty (1440) Gigabits per second in a 1-U space in full-duplex mode if employing a ten (10) Gigabit transceiver. This configuration can also support at least six hundred (600) Gigabits per second in half-duplex mode in a 1-U space and at least one thousand two hundred (1200) Gigabits per second in full-duplex mode in a 1-U space, respectively, if employing a one hundred (100) Gigabit transceiver. This configuration can also support at least four hundred eighty (480) Gigabits per second in half-duplex mode in a 1-U space and nine hundred sixty (960) Gigabits per second in full-duplex mode in a 1-U space, respectively, if employing a forty (40) Gigabit transceiver. At least sixty (60) duplex transmission and reception pairs in a 1-U space can allow for a data rate of at least six hundred (600) Gigabits per second in a 1-U space in half-duplex mode or at least one thousand two hundred (1200) Gigabits per second in a 1-U space in full-duplex mode when employing a ten (10) Gigabit transceiver. At least forty nine (49) duplex transmission and reception pairs in a 1-U space can allow for a data rate of at least four hundred eighty-one (481) Gigabits per second in half-duplex mode or at least nine hundred sixty-two (962) Gigabits per second in a 1-U space in full-duplex mode when employing a ten (10) Gigabit transceiver.

The width **W₁** of front opening **62** could be designed to be greater than eighty-five percent (85%) of the width **W₂** of the front side **60** of the main body **61** of the fiber optic module **22**. For example, the width **W₁** could be designed to be between ninety percent (90%) and ninety-nine percent (99%) of the width **W₂**. As an example, the width **W₁** could be less than ninety (90) mm. As another example, the width **W₁** could be less than eighty-five (85) mm or less than eighty (80) mm. For example, the width **W₁** may be eighty-three (83) mm and width **W₂** may be eighty-five (85) mm, for a ratio of width **W₁** to width **W₂** of 97.6%. In this example, the front opening **62** may support twelve (12) fiber optic connections in the width **W₁**to support a fiber optic connection density of at least one fiber optic connection per 7.0 mm of width **W₁** of the front opening **62**. Further, the front opening **62** of the fiber optic module **22** may support twelve (12) fiber optic connections in the width **W₁** to support a fiber optic connection density of at least one fiber optic connection per 6.9 mm of width **W₁** of the front opening **62**.

Further as illustrated in **FIG. 4**, height **H₁** of front opening **62** could be designed to be at least ninety percent (90%) of height **H₂** of the front side **60** of the main body **61** of the fiber optic module **22**. In this manner, the front opening **62** has sufficient height to receive the fiber optic components **23**, and such that three (3) fiber optic modules **22** can be disposed in a 1-U space height. As an example, height **H₁** could be twelve (12) mm or less or ten (10) mm or less. As an example, height **H₁** could be ten (10) mm and height **H₂** could be eleven (11) mm (or 7/16 inches), for a ratio of height **H₁** to width **H₂** of 90.9%.

The high-density fiber optic modules disclosed above provide larger numbers of fiber optic connections in a given space. However, due to the reduced form factor, the space in the interior of some high-density fiber optic modules is limited. This limited space means that certain high-density fiber optic modules may not be able to easily support certain functionalities, such as fiber splicing of fiber optic pigtail fibers to trunk optical fibers coming from the customer premise equipment. The embodiments disclosed herein allow the interior space of the high-density fiber optic modules to be maximized, allowing for a high-density fiber optic module to support splicing of pre-connectorized pigtail fibers within the high-density fiber optic module. In this manner, the high-density fiber optic module disclosed herein can retain its limited form factor and other functionalities while also adding the functionality of a fiber splice tray. Using the embodiments disclosed herein allows a user to splice fiber optic pigtails to trunk optical fibers while maintaining the port density of the high-density fiber optic module.

In this regard, a high-density fiber optic module is disclosed having a latch for releasably latching the module to a rack or cabinet and a pushrod allowing for the release of the latch from the back end of the module. The pushrod is used to allow the high-density fiber optic module to be longer than a standard fiber optic module, which provides for more interior space within the high-density fiber optic module for splicing and other functions. The pushrod feature also allows a user to activate or deactivate the module latch from a rear of the housing of the high-density fiber optic module while maintaining the latch position of the standard fiber optic module, which allows the longer fiber optic module to retain the same feel as a standard fiber optic module. In this manner, the pushrod activated latch allows the fiber optic module to be longer, which permits the interior space of the fiber optic module to be maximized for fiber routing and splicing. This, in turn, allows the module and splice functions to be combined in a single fiber optic component.

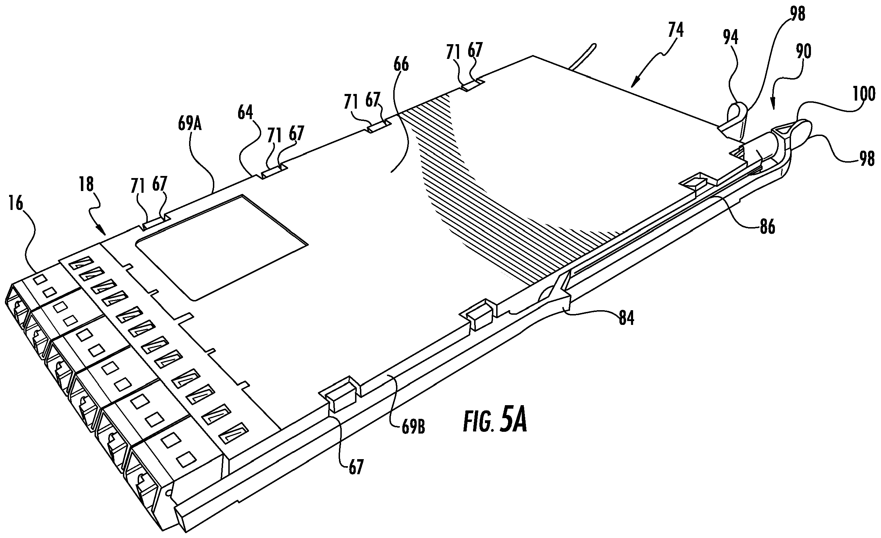

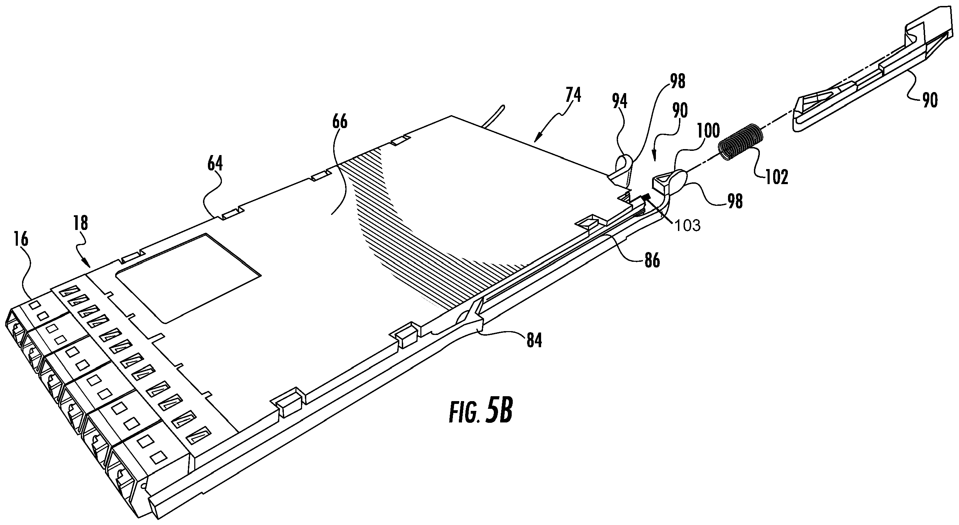

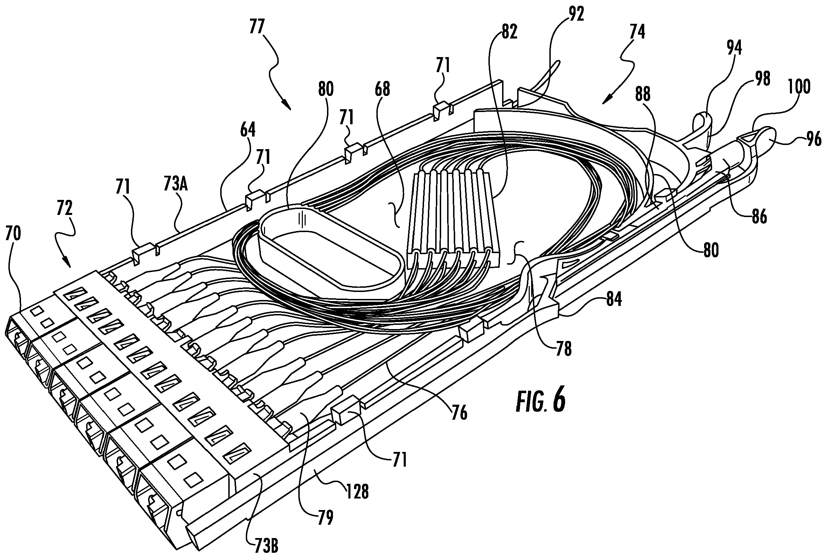

In this regard, **FIGS. 5A****,** **5B****,** and **6** illustrate an exemplary fiber optic module **64** from a front perspective view. **FIG. 5A** illustrates the fiber optic module **64** with a cover **66** attached, while **FIG. 5B** illustrates the fiber optic module **64** with an exemplary pushrod assembly in partially exploded view. In one embodiment, the fiber optic module 64 is a high-density fiber optic module. In one embodiment, the fiber optic module 64 may be approximately eighty-four and a half millimeters (84.5 mm) in width, approximately one hundred and fifty millimeters (150 mm) in length, and approximately twelve millimeters (12 mm) in height.

**FIG. 6** illustrates the fiber optic module **64** with the cover **66** removed showing an interior **68** of the fiber optic module **64**. The fiber optic module **64** supports fiber optic adapters **70** mounted at a front end **72** of the fiber optic module **64**. Although not shown in **FIGS. 5A**, **5B**, and **6**, fiber optic adapters **70** may be mounted at a back end **74** of the fiber optic module **64**. The fiber optic adapters **70** may extend from an exterior of the fiber optic module **64** into the interior **68**.

As can be seen in **FIG. 6**, optical fibers **76** connect to and extend from the fiber optic adapters **70** in the interior **68**. The fiber optic module **64** is sized so as to allow optical components to be positioned in the interior **68**. In this regard, the interior **68** provides optical fiber routing space **78**, bend radius control **80**, and splice holders **82**.

With reference to **FIGS. 5A**, **5B**, and **6**, the cover **66** includes notches **67** disposed on sides **69A**, **69B** of the cover **66** that are configured to interlock with protrusions **71** disposed on sides **73A, 73B** of a main body **77** of the fiber optic modules **64** when the cover **66** is attached to the main body **77** to secure the cover **66** to the main body **77**. Although not shown in **FIGS. 5A**, **5B**, and **6**, the cover **66** may also contain notches **67** disposed on a front end **72** and back end **74**, respectively, of the cover **66** that are configured to interlock with protrusions disposed in the front end **72** and the back end **74**, respectively, of the main body **77** when the cover **66** is attached to the main body **77** to also secure the cover **66** to the main body **77**.

With continuing reference to **FIG. 6**, the fiber optic components **70** are disposed through an opening in the front end **72**. In this embodiment, the fiber optic components **70** are duplex LC adapters, which support single or duplex fiber connections and connectors. The duplex LC adapters may contain protrusions that are configured to engage with orifices disposed on the main body **77** to secure the duplex LC adapters in the main body **77**. The optical fibers **76** are disposed in the optical fiber routing space **78** with fiber optic connectors **79** terminating one end of the optical fibers **76** connected to the fiber optic adapters **70**. Various fiber management features are disposed in the interior **68** of the fiber optic module **64**, as illustrated in **FIG. 6**, to retain, manage, and control the looping of the optical fibers **76**. Bend radius control **80** 2. is used to maintain proper bend allowances for the optical fibers **76**. In particular, the bend radius control **80** and the splice holders **82** are designed and positioned to allow for fiber routing within the fiber routing space **78** and to provide a bend radius **R** in the optical fibers **76** no greater than forty (40) mm, such as, for example, twenty-five (25) mm or less. In one embodiment, the bend radius will be between approximately twenty (20) mm and approximately twenty-five (25) mm. The splice holder **82** is configured to be removable from the interior **68** of the fiber optic module **64** in one embodiment.

Additionally, the fiber optic module **64** has a releasable latch **84** and a pushrod **86**. The pushrod 86 is positioned in a groove **88** disposed in a side **73B** of the main body **77** of the fiber optic module **64**. The profile of the pushrod **86** and groove **88** along with the selection of the materials used for the pushrod **86** and the groove **88** prevent the pushrod **86** from binding while maintaining the action of the standard length fiber optic modules. In one embodiment, the pushrod **86** may be made of Delrin® or other polyoxymethylene material, which is an engineering thermoplastic used in precision parts requiring high stiffness, low friction and excellent dimensional stability. In other embodiments, the pushrod **86** may be made of other plastics or made of metal.

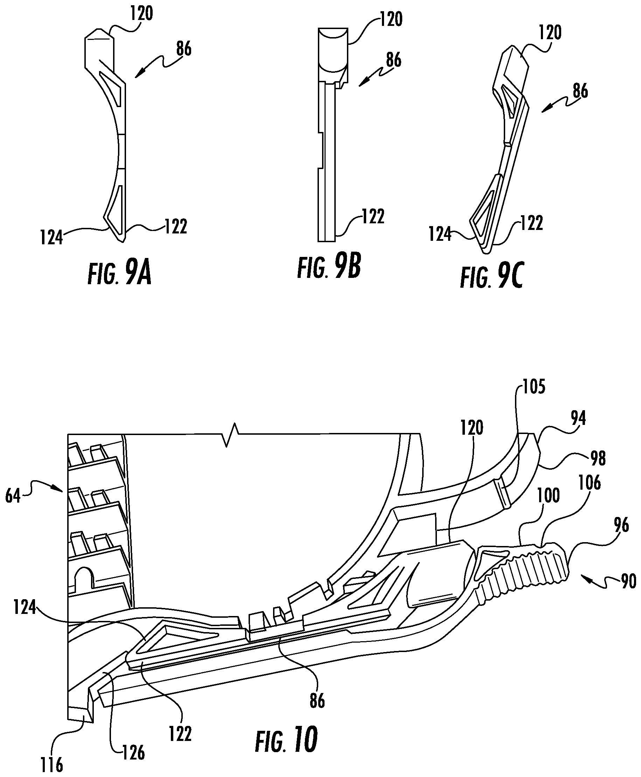

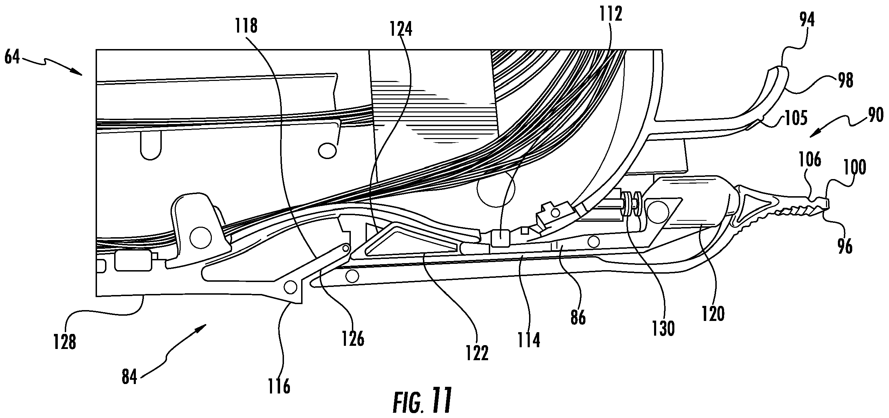

The fiber optic module **64** may also have a pinch grip **90** disposed on one end of the fiber optic module **64**. The pinch grip **90** is configured to activate the pushrod **86** when pressure is applied to the pinch grip **90**. A simple to use cable entry strain relief mechanism **92** may be provided for trunk optical fibers coming into the fiber optic module **64** from the customer equipment. The pinch grip **90** has an arm **94** and a lever **96** each providing pinch surfaces **98**, **100**, respectively. In one embodiment, at least one of the arm **94** and the lever **96** may be textured on at least one surface to provide a better grip for the operator. The arm **94** may remain stationary while the lever **96** may be able to resiliently move toward and away from the arm **94**. A detent **104** may be provided in the pinch grip **90** to prevent the two pinch surfaces **98**, **100** from sliding with respect to each other which will maximize the travel of the pushrod **86**. It may be desirable for the two pinch surfaces **98**, **100** not to move relative to each other, so that the the travel of the pushrod **86** is maximized. The detent **104** may be in the form of complementary protrusion **105** and slot **106** (see **FIGS. 10** and **11**).

Referring back to **FIG. 5B**, the fiber optic module **64** is shown with an exemplary pushrod **86** assembly in partially exploded view. In one embodiment, a compression spring **102** is provided between the pushrod **86** and the fiber optic module **64**. The compression spring **102** will fit on to one end of the pushrod **86** and over a guide post **103** connected to the fiber optic module **64**. The compression spring **102** is captured in the first end **120** of the pushrod **86**. A force of the compression spring **102** biases pushrod **86** to one end of the groove **88**. The compression spring **102** maintains the pushrod **86** in a latched position within the groove **88** in the fiber optic module **64**.

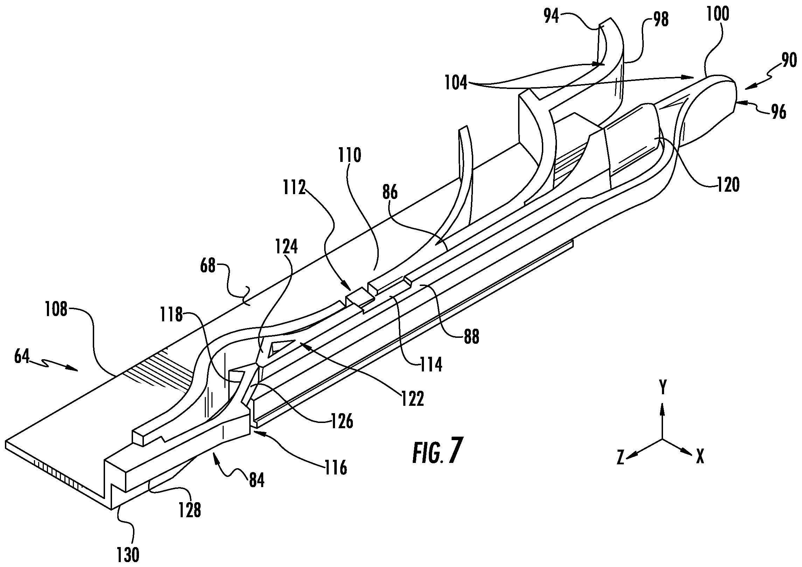

Referring now to **FIG. 7**, there is shown a detail view of portion of a bottom **108** of the interior **68** of the fiber optic module **64** with the pushrod **86** in the groove **88**. A wall **110** of the fiber optic module **64** has a stop **112** which positions in notch **114**. The stop **112** stops the travel of the pushrod **86** and retains the pushrod **86** in the groove **88**. The releasable latch **84** has a support member **128** attached to a side **130** of the module **64**. The support member **128** is resiliently movable. Retention clip **116** and actuator **118** extend from the support member **128**. The retention clip **116** may interact with a fiber optic equipment rack **14** or cabinet, or other equipment in the equipment rack or cabinet, as non-limiting examples, a chassis, tray or shelf, to releasably retain the fiber optic module **64**.

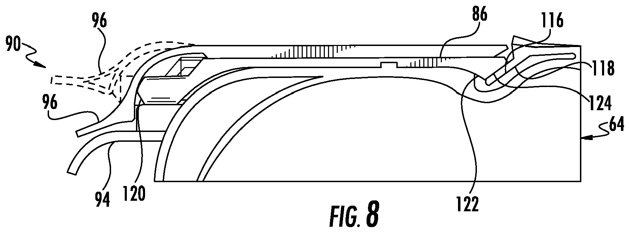

Referring now also to **FIG. 8**, there is illustrated the pinch grip **90** and pushrod **86** in an activated state superimposed over a deactivated state. To be in the activated state, the pinch grip **90** may be manipulated by applying pressure to the lever **96**, for example by a thumb or a finger, thereby moving the lever **96** toward the arm **94** until the pinch surfaces **98**, **100** engage. At engagement, the protrusion **105** inserts into the slot **106**. In this manner, the pinch surfaces **98**, **100** remain in aligned contact during the activated state. The movement of the lever **96** applies force on a first end **120** of the pushrod **86** forcing the pushrod **86** to travel in the groove **88** toward the front end **72** of the fiber optic module **64**. The pushrod **86** travels in the groove **88** until stop **112** stops the travel or the pinch surfaces **98**, **100** make contact.

Referring now to **FIG. 10**, the pushrod **86** has a second end **122**. The second end **122** has a first angled surface **124** which contacts a complementary second angled surface **126** of the actuator **118**. As the first angled surface **124** contacts the second angled surface **126**, the first angled surface **124** applies pressure on the second angled surface **126** causing the support member **128** and, thereby, the retention clip **116** to move toward the interior **68** of the fiber optic module **64** and release the fiber optic module **64** from the equipment rack or cabinet or other equipment in which the fiber optic module **64** may be mounted. The pinch grip **90** may then be used to remove the fiber optic module **64** from the equipment rack or cabinet or other equipment in which it is mounted aided by the detent **104** keeping the pinch surface **98**, **100** aligned.

Since the lever **96** is resiliently movable, releasing pressure on the pinch grip **90** allows the lever **96** to automatically move away from the arm **94** causing the protrusion **105** to remove from the slot **106** disengaging the pinch surfaces **98**, **100**. As the lever **96** moves away from the arm **9**4, force on the first end **120** of the pushrod **86** is released which also causes the release of pressure from the first angled surface **124** on the second angled surface **126**. Because the support member **128** is resiliently movable, releasing pressure by the first angled surface **124** against the second angled surface **126** allows the support member **128**, and, thereby, the retention clip **116** to automatically move away from the interior **68** of the fiber optic module **64**. Also, the movement of the support member **128** causes the second angled surface **126** to apply pressure on the first angled surface **124**. This forces the pushrod **86** to travel toward the back end **74** of the fiber optic module **64** and into the deactivated state.

Referring now to **FIGS. 9A**, **9B**, and **9C**, there are shown detail views of the pushrod **86** from the top, side and front perspective, respectively.

Referring now to **FIGS. 10** and **11**, there are shown embodiments of the fiber optic module **64** with the pushrod **86** and pinch grip **90** in the deactivated state. In **FIG. 11**, a spring member **130** biases against the first end **120** of the pushrod **86** to move the pushrod **86** back to a deactivated state.

In this manner, the pushrod is used to allow the high-density fiber optic module to be longer than a standard fiber optic module, which provides for more interior space within the high-density fiber optic module for splicing and other functions. The pushrod feature also allows a user to activate or deactivate the module latch from a rear of the housing of the high-density fiber optic module while maintaining the latch position of the standard fiber optic module, which allows the longer fiber optic module to retain the same feel as a standard fiber optic module. In this manner, the pushrod activated latch allows the fiber optic module to be longer, which permits the interior space of the fiber optic module to be maximized for fiber routing and splicing. This, in turn, allows the module and splice functions to be combined in a single fiber optic component.

Other features that allow the interior space of the fiber optic module to be maximized for fiber routing and splicing, which, in turn, allows the module and splice functions to be combined in a single fiber optic component are now disclosed. These other features include various fiber management features within the interior of the high-density fiber optic module.

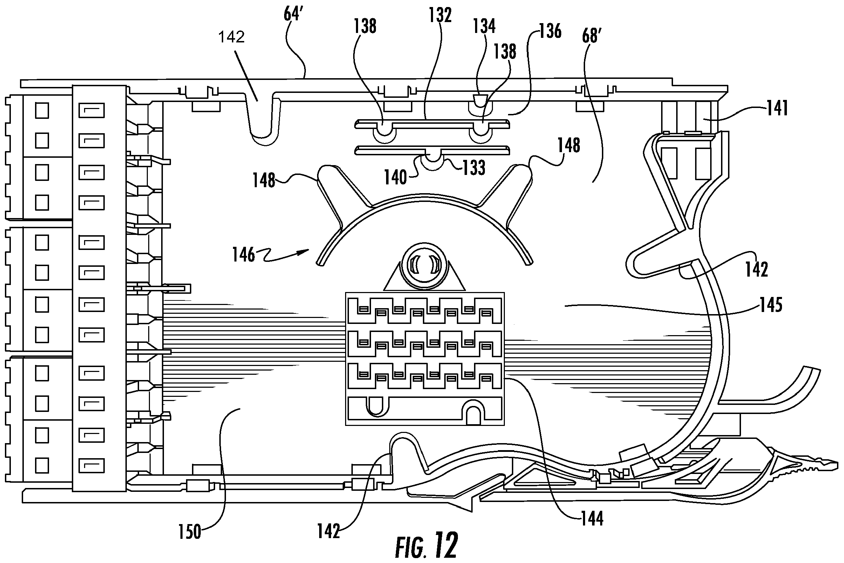

In this regard, reference is made now to **FIG. 12**, which illustrates another embodiment of a fiber optic module **64'** in which the cover is removed showing an interior **68'**. At least one fiber management feature is provided within the interior **68'** to assist in fiber management within the fiber optic module **64'**. A plurality of fiber management features according to one embodiment maybe mounted in the interior **68'**, as shown in **FIG. 12**. One exemplary fiber management feature is a component holder. Referring to **FIG. 12**, a first component holder **132** and a second component holder **133** are shown. A retaining tab **134** is positioned on a side of the fiber optic module **64'**. The first component holder **132** is spaced from a side of the fiber optic module **64'** such that a fiber routing channel **136** is provided between the first component holder **132** and the retaining tab **134** positioned on a side of the fiber optic module **64'**. The first component holder **132** has tabs **138** and the second component holder **133** has a tab **140** that aid in holding a fiber optic component, such as a ribbon furcation component or a splitter component. An incoming fiber optic cable feature **141** provides strain relief. One or more fiber management guides **142** are also shown in **FIG. 12**. In one embodiment, these fiber management guides **142** are disposed around an outer perimeter of the interior **68'** of fiber optic module **64'**. Although the embodiment shown in **FIG. 12** shows three fiber management guides **142**, additional fiber management guides **142** may be provided. In one embodiment, another fiber management guide **142** may be provided in the bottom right corner of the fiber optic module **64',** near the latch.

With continued reference to **FIG. 12**, a splice holder assembly **144** is attached to a base **145** of the fiber optic module **64'**. In one embodiment, the splice holder assembly **144** is removable from the fiber optic module **64'**. Also included in the interior **68'** of the fiber optic module **64'** is a bend radius control **146** attached to a base **145** of the fiber optic module **64'**. In one embodiment, as shown in **FIG. 12**, the bend radius control **146** has a plurality of tabs **148** which further aid in managing fiber routing. The interior **68'** includes an area for fiber pigtail routing **150**. In particular, the bend radius control **146** and the other fiber management features positioned within the interior **68'** of the fiber optic module **64'** and the distance between them are designed to allow for fiber routing within the area for fiber pigtail routing **150** and to provide a bend radius **R** in the optical fibers routed within the fiber optic module of no greater than forty (40) mm, such as, for example, twenty-five (25) mm or less. In one embodiment, the bend radius will be between approximately twenty (20) mm and approximately twenty-five (25) mm. The splice holder assembly **144** is configured to be removable from the interior **68'** of the fiber optic module **64** in one embodiment.

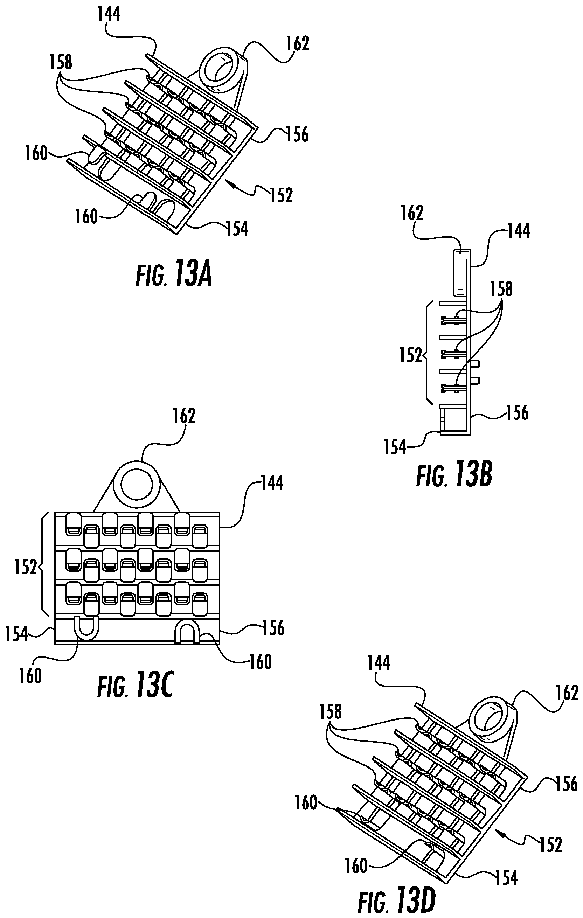

Referring now to **FIGS. 13A-13C**, there are shown detail views of the splice holder assembly **144** from top, side and front perspective, respectively. The splice holder assembly **144** is shown as having a single fiber splice holder assembly **152** and one ribbon splice holder feature **154** on a common base **156**. The single fiber splice holder assembly **152** may have any number of single fiber splice holders **158**. Each of the single fiber splice holders **158** may hold at least two single fiber splices, allowing for multiple splices to be held by the single fiber splice holder assembly **152**. In one embodiment, the single fiber splice holder assembly **152** may be a 2X6 assembly. In this embodiment, the single fiber splice holder assembly **152** can hold up to twelve (12) single fiber splices, with the single fiber splices stacked two (2) deep in six (6) locations. The single fiber splice holders **158** extend from the base **156** in the single fiber splice holder assembly **152** and provide for a friction fit of the single fiber splice to retain the single fiber splice in the splice holder assembly **152**. Tabs **160** retain a ribbon fiber splice in the ribbon splice holder feature **154** by providing a friction fit of the ribbon fiber splice to retain the ribbon fiber splice in the ribbon splice holder **154**. Mounting feature **162** may be used to mount the splice holder assembly **144** to the interior **68'** of module **64'**.

**FIG. 13D** is a detail view from the top of an alternate splice holder assembly **144**. This splice holder assembly **144** is similar to the splice holder assembly **144** in **FIG. 13A**, with the tabs **160**, instead of being straight, formed in the shape of a downwardly curved finger having an arc, which helps retain the ribbon fiber splice in place. In addition, the curved finger is smooth on the bottom, which helps retain the ribbon fiber splice without pinching or damaging it. Thus, the tabs **160** may be formed in the shape of a downwardly curved finger having an arc and a rounded surface configured to retain the ribbon fiber splice in the ribbon fiber splice holder without pinching or damaging the ribbon fiber splice. In one embodiment, the tabs **160** have a downward arc of less than ninety (90) degrees.

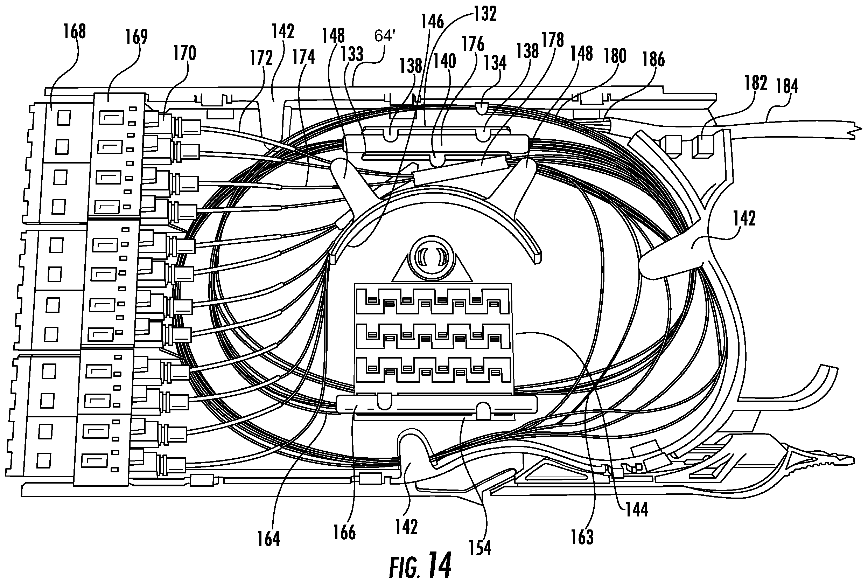

**FIG. 14** illustrates the fiber optic module **64'** of **FIG. 12** with a ribbon harness **163** spliced to a ribbon cable **164** by ribbon fiber splice **166** positioned in ribbon splice holder feature **154**. In one embodiment, it may be an LC terminated, XB fiber ribbon harness spliced to an SMF ribbon cable. In this embodiment, certain fiber optic components may be preloaded in the fiber optic module **64'** before the fiber optic module **64'** is deployed in the field. At least one adapter **168** (the embodiment of **FIG. 14** shows a plurality of adapters **168**) is disposed though an opening in one end of the fiber optic module **64'**. In one embodiment, the adapters **168** may be duplex LC adapters, which support single or duplex fiber connections and connectors. The adapters **168** may be configured to engage with orifices **169** disposed on the fiber optic module **64'** to secure the adapters **168** to the fiber optic module **64'**.

A ribbon harness **163** is disposed in the interior **68'** of the fiber optic module **64'** with fiber optic connectors **170** terminating one end of optical fibers (see, e.g. **172**, **174**) connected to the adapters **168**. A ribbon fiber splice **176** is positioned and held in place by first component holder **132** and the second component holder **133**, which in part is accomplished by the tabs **138** of the first component holder **132**. Certain optical fibers **172**, **174** are held together by a spiral tube **178** which is held between the tab **140** of the second component holder **133** and the bend radius control **146**. The tabs **148** of the bend radius control **146** may also provide for fiber management. Additional fibers **180** may be held in place in the fiber routing channel **136** by the retaining tab **134**. Additional fiber management is provided by fiber management guides **142** disposed around an outer perimeter of the fiber optic module **64'**.

In one embodiment, the fiber management guides **142** are formed in the shape of a downwardly curved finger having an arc, which helps retain the optical fibers or ribbon fiber splice in place. In addition, the curved finger is smooth on the bottom, which helps retain a fiber optic component, such as an optical fibers or a ribbon fiber splice, without pinching or causing damage. Thus, the fiber management guides **142** may be formed in the shape of a downwardly curved finger having an arc and a rounded surface configured to retain a fiber optic component, such as an optical fiber or a ribbon fiber splice, without pinching or damaging them. In one embodiment, the fiber management guides **142** have a downward arc of less than ninety (90) degrees.

An incoming fiber optic cable feature **182** provides strain relief for an incoming trunk optical fiber cable **184** containing individual optical fibers **186**.

In one embodiment, any of the fibers in the ribbon harness **163** or in the ribbon cable **164** may be a bend optimized fiber, such as, for example XB fiber, such as ClearCurve® Multimode fiber commercially available from Corning Incorporated. Using a bend optimized fiber may reduce the risk of optical attenuation at longer wavelengths.

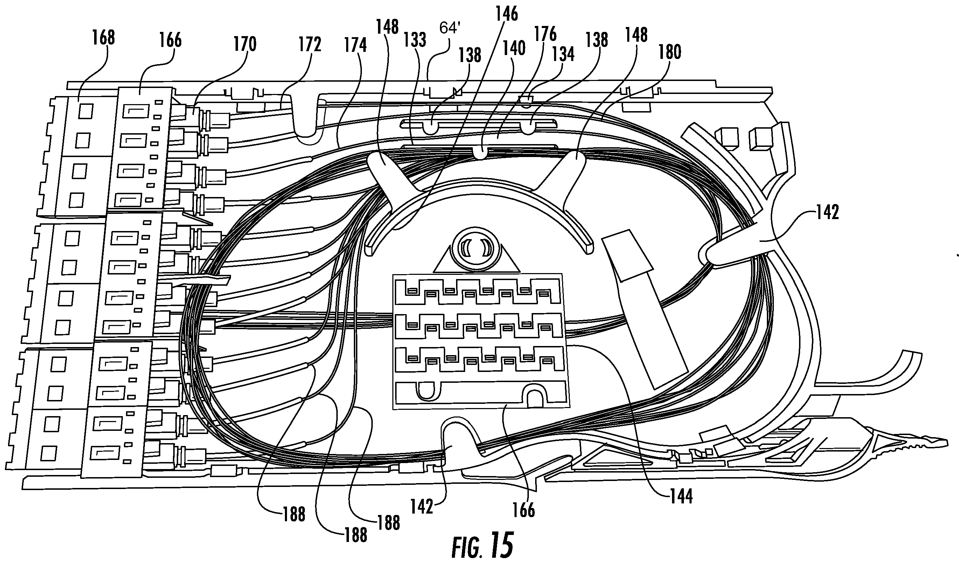

**FIG. 15** illustrates the fiber optic module **64'** of **FIG**. **12** with single fiber pigtails **188** routed therein. In one embodiment, the pigtails **188** may be pre-loaded into the fiber optic module 64 and are LC terminated, XB fiber pigtails. Various ones of the single fiber pigtails **188** are routed over various fiber management features. For example, one or more single fiber pigtails **188** are held in place by a fiber management guide **142** and routed through fiber routing channel **136** by retaining tab **134**. Another single fiber pigtail **188** is routed to and held in place by a tab **138** of the first component holder **132**. Additional single fiber pigtails **188** are routed over bend radius control **146** and held in place by the tab **140** of the second component holder **133** and a tab **148** of the bend radius control **146**. Single fibers of the single fiber pigtails **188** are routed to and through the single fiber splice holders **158** of the single fiber splice holder assembly **152**.

In this manner, the fiber management features shown in **FIG. 14** and **FIG. 15** allow a large number of various types of optical fibers to be managed in the small interior space of a high-density fiber optic module. The fiber management features disclosed herein allow the interior space of the high-density fiber optic modules to be maximized, allowing for the high-density fiber optic module to support splicing of pre-connectorized pigtail fibers within the high-density fiber optic module. In this manner, the high-density fiber optic module can retain its limited form factor and other functionalities while also adding the functionality of a fiber splice tray. Using the fiber management features disclosed herein allows a user to splice fiber optic pigtails to trunk optical fibers while maintaining the port density of the high-density fiber optic module.

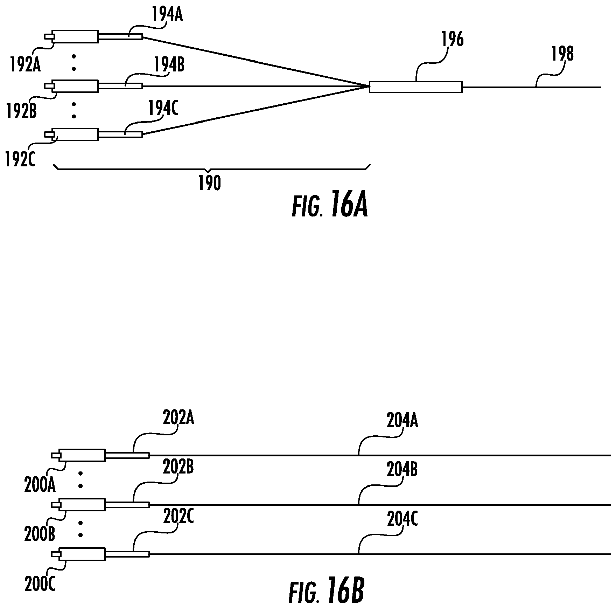

**FIG. 16A** illustrates one embodiment of a ribbon harness that may be employed in the high-density fiber optic modules disclosed herein. **FIG. 16A** shows pigtails **190**, each terminated with a connector **192A**, **192B**, and **192C**, respectively. In one embodiment, the pigtails **190** may be approximately fourteen and a half (14.5) inches (368.3 mm) long. The pigtails **190** may be an XB pigtail in one embodiment. Tubes **194A**, **194B**, and **194C** are provided to protect the fibers in the pigtails **190** from being damaged if they are bent in order to be routed within the interior of the fiber optic module. In one embodiment, the tubes **194A**, **194B**, and **194C** may be **900** um plastic tubes and may range from about 0.75 inches (19.1 mm) to about four (4) inches (101.6 mm) in length. A ribbon splice protector **196** may be provided for furcation, with a ribbon fiber **198** coming out of one end of the ribbon splice protector **196**. In one embodiment, the ribbon splice protector **196** may be approximately one and a half (1.5) inches (38.1 mm) long. In one embodiment, the ribbon fiber **198** may be approximately sixteen and a half (16.5) inches (419.1 mm) long and may be an XB ribbon fiber.

**FIG. 16B** illustrates one embodiment of pigtails that may be employed in the high-density fiber optic modules disclosed herein. **FIG. 16B** shows three pigtail fibers **204A**, **204B**, and **204C**, with three connectors **200A**, **200B**, and **200C** disposed at one end of the respective pigtail fibers, one for each fiber in the pigtail. In one embodiment, the pigtail fibers **204A**, **204B**, and **204C** may be approximately thirty-three (33) inches (838.2 mm) long. The pigtail fibers **204A**, **204B**, and **204C** may be XB pigtails in one embodiment. Tubes **202A**, **202B**, and **202C** are provided to protect the pigtail fibers **204A**, **204B**, and **204C** from being damaged if they are bent in order to be routed within the interior of the fiber optic module. In one embodiment, the tubes **202A**, **202B**, and **202C** may be 900 um plastic tubes and may range from about 0.75 inches (19.1 mm) to about four (4) inches (101.6 mm) in length.

The embodiments of the fiber management features disclosed herein allow the interior space of the high-density fiber optic modules to be maximized, allowing for the high-density fiber optic module to support splicing of pre-connectorized pigtail fibers within the high-density fiber optic module. The design of the fiber management features disclosed herein allows the user to splice and then safely and securely store excess fiber necessary for the splicing operation. In this manner, the high-density fiber optic module can retain its limited form factor and other functionalities while also adding the functionality of a fiber splice tray. Using the embodiments disclosed herein allows a user to splice fiber optic pigtails to trunk optical fibers while maintaining the port density of the high-density fiber optic module. This, in turn, allows the module and splice functions to be combined in a single fiber optic component.

The terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or like. Likewise, other types of suitable optical fibers include bend-insensitive optical fibers, or any other expedient of a medium for transmitting light signals. An example of a bend-insensitive optical fiber is ClearCurve® Multimode fiber commercially available from Corning Incorporated.

Many modifications and other embodiments set forth herein will come to mind to one skilled in the art to which the embodiments pertain having the benefit of the teachings presented in the foregoing descriptions and the associated drawings. Therefore, it is to be understood that the description and claims are not to be limited to the specific embodiments disclosed and that modifications and other embodiments are intended to be included within the scope of the appended claims.

It is intended that the embodiments cover the modifications and variations of the embodiments provided they come within the scope of the appended claims and their equivalents. Although specific terms are employed herein, they are used in a generic and descriptive sense only and not for purposes of limitation.

## Claims

1. A fiber optic module (64'), comprising:
an interior (68');
at least one adapter (168) disposed in one end of the fiber optic module (64') having a fiber optic connector configured to connect to one or more optical fibers;
a splice holder assembly (144) positioned in the interior (68'), wherein the splice holder assembly (144) comprises a single fiber splice holder assembly (152) and a ribbon fiber splice holder (154) mounted on a common base (156);
wherein the splice holder assembly (144) is configured to provide fiber management for the one or more optical fibers within the interior (68') of the fiber optic module (64');
**characterized by**
a first component holder (132) and a second component holder (133), wherein the first component holder (132) and the second component holder (133) each comprise a tab (138, 140) configured to hold a fiber optic component, namely a ribbon furcation component or a splitter component, in place within the interior (68') of the fiber optic module (64').

2. The fiber optic module of claim 1, further comprising a plurality of fiber management features positioned in the interior (68') of the fiber optic module.

3. The fiber optic module of any of claims 1 and 2, wherein the splice holder assembly (144) is removable from the fiber optic module (64').

4. The fiber optic module of any of claims 1-3, further comprising a retaining tab (134) positioned on a side of the fiber optic module, wherein the first component holder (132) is spaced from the side of the fiber optic module such that a fiber routing channel (136) is provided between the first component holder (132) and the retaining tab (134).

5. The fiber optic module of any of claims 1-4, further comprising a plurality of fiber management guides (142) disposed on an outer perimeter of the interior (68') of the fiber optic module (64').

6. The fiber optic module of any of claims 1-5, further comprising a bend radius control (146) attached to the interior (68') of the fiber optic module (64').

7. The fiber optic module of claim 6, wherein the bend radius control (146) is configured to allow for fiber routing within the interior (68') of the fiber optic module and to provide a bend radius of between approximately 20 mm and 25mm.

8. The fiber optic module of any of claims 1-7, wherein the ribbon fiber splice holder (154) comprises at least one tab (160) configured to retain a ribbon fiber splice by providing a friction fit of the ribbon fiber splice.

9. The fiber optic module of claim 8, wherein the at least one tab (160) is formed in the shape of a downwardly curved finger having an arc and at least one tab has at least one rounded smooth surface configured to retain the ribbon fiber splice in the ribbon fiber splice holder without pinching or damaging the ribbon fiber splice.

10. The fiber optic module of any of claims 5-9, wherein at least one fiber management guide (142) of the plurality of fiber management guides is formed in the shape of a downwardly curved finger having an arc, and the at least one fiber management guide (142) has at least one rounded smooth surface configured to retain a fiber optic component without pinching or damaging the fiber optic component.

11. The fiber optic module of any of claims 1-10, wherein the splice holder assembly (144) is configured to provide fiber management for at least one of a fiber harness spliced to a ribbon cable by a first ribbon fiber splice and a plurality of fiber pigtails.

## Patentansprüche

1. Faseroptisches Modul (64'), umfassend:
ein Inneres (68');
wenigstens einen Adapter (168), der in einem Ende des faseroptischen Moduls (64') angeordnet ist, einen faseroptischen Verbinder aufweisend, der dafür ausgelegt ist, mit einer oder mehreren Lichtleiterfasern verbunden zu werden;
eine Spleißhalteranordnung (144), die im Inneren (68') angeordnet ist, wobei die Spleißhalteranordnung (144) eine Einzelfaser-Spleißhaltervorrichtung (152) und einen Bändchenfaser-Spleißhalter (154) umfasst, die auf einer gemeinsamen Basis (156) montiert sind;
wobei die Spleißhalteranordnung (144) dafür ausgelegt ist, Fasermanagement für die ein oder mehreren Lichtleiterfasern im Inneren (68') des faseroptischen Moduls (64') bereitzustellen;
**gekennzeichnet durch**
einen ersten Komponentenhalter (132) und einen zweiten Komponentenhalter (133), wobei der erste Komponentenhalter (132) und der zweite Komponentenhalter (133) jeweils eine Lasche (138, 140) aufweisen, die dafür ausgelegt ist, eine faseroptische Komponente, nämlich eine Bändchenfurkationskomponente oder eine Splitterkomponente, am Platz im Inneren (68') des faseroptischen Moduls (64') zu halten.

2. Faseroptisches Modul nach Anspruch 1, ferner mehrere Fasermanagementmerkmale umfassend, die im Inneren (68') des faseroptischen Moduls angeordnet sind.

3. Faseroptisches Modul nach einem der Ansprüche 1 und 2, wobei die Spleißhalteranordnung (144) aus dem faseroptischen Modul (64') entnommen werden kann.

4. Faseroptisches Modul nach einem der Ansprüche 1-3, ferner eine Rückhaltelasche (134) umfassend, die an einer Seite des faseroptischen Moduls angeordnet ist, wobei der erste Komponentenhalter (132) von der Seite des faseroptischen Moduls derart beabstandet ist, dass ein Faserleitungskanal (136) zwischen dem ersten Komponentenhalter (132) und der Rückhaltelasche (134) bereitgestellt wird.

5. Faseroptisches Modul nach einem der Ansprüche 1-4, ferner mehrere Fasermanagementführungen (142) umfassend, die an einem Außenumfang des Inneren (68') des faseroptischen Moduls (64') angeordnet sind.

6. Faseroptisches Modul nach einem der Ansprüche 1-5, ferner eine Biegeradiuskontrolle (146) umfassend, die im Inneren (68') des faseroptischen Moduls (64') angebracht ist.

7. Faseroptisches Modul nach Anspruch 6, wobei die Biegeradiuskontrolle (146) dafür ausgelegt ist, eine Faserleitung im Inneren (68') des faseroptischen Moduls zu ermöglichen und einen Biegeradius zwischen ungefähr 20 mm und 25 mm bereitzustellen.

8. Faseroptisches Modul nach einem der Ansprüche 1-7, wobei der Bändchenfaser-Spleißhalter (154) wenigstens eine Lasche (160) umfasst, die dafür ausgelegt ist, einen Bändchenfaserspleiß zu halten, indem eine Reibungspassung des Bändchenfaserspleißes bereitgestellt wird.

9. Faseroptisches Modul nach Anspruch 8, wobei die wenigstens eine Lasche (160) in Form eines abwärts gekrümmten Fingers mit einer Wölbung ausgebildet ist und wenigstens eine Lasche wenigstens eine abgerundete glatte Oberfläche aufweist, die dafür ausgelegt ist, den Bändchenfaserspleiß im Bändchenfaser-Spleißhalter zu halten, ohne den Bändchenfaserspleiß einzuklemmen oder zu beschädigen.

10. Faseroptisches Modul nach einem der Ansprüche 5-9, wobei wenigstens eine Fasermanagementführung (142) der mehreren Fasermanagementführungen in Form eines abwärts gekrümmten Fingers mit einer Wölbung ausgebildet ist und die wenigstens eine Fasermanagementführung (142) wenigstens eine abgerundete glatte Oberfläche aufweist, die dafür ausgelegt ist, eine faseroptische Komponente zu halten, ohne die faseroptische Komponente einzuklemmen oder zu beschädigen.

11. Faseroptisches Modul nach einem der Ansprüche 1-10, wobei die Spleißhalteranordnung (144) dafür ausgelegt ist, Fasermanagement für wenigstens entweder einen Faserbaum, der mit einem ersten Bändchenfaserspleiß an ein Bändchenkabel gespleißt ist, und/oder mehrere Faser-Pigtails bereitzustellen.

## Revendications

1. Module à fibres optiques (64'), comprenant :
un intérieur (68') ;
au moins un adaptateur (168) disposé dans une extrémité du module à fibres optiques (64') ayant un connecteur de fibres optiques configuré pour se connecter à une ou plusieurs fibres optiques ;
un ensemble support d'épissures (144) positionné à l'intérieur (68'), où l'ensemble support d'épissures (144) comprend un seul ensemble support d'épissures de fibres (152) et un support d'épissures de fibres en ruban (154) monté sur une base commune (156) ;
où l'ensemble support d'épissures (144) est configuré pour permettre une gestion des fibres pour les une ou plusieurs fibres optiques à l'intérieur (68') du module à fibres optiques (64') ;
**caractérisé par**
un premier support de composant (132) et un second support de composant (133), où le premier support de composant (132) et le second support de composant (133) comprennent chacun une languette (138, 140) configurée pour maintenir un composant de fibre optique, à savoir un composant de furcation en ruban ou un composant séparateur, en place à l'intérieur (68') du module à fibres optiques (64').

2. Module à fibres optiques selon la revendication 1, comprenant en outre une pluralité d'éléments de gestion de fibres positionnés à l'intérieur (68') du module à fibres optiques.

3. Module à fibres optiques selon l'une quelconque des revendications 1 et 2, dans lequel l'ensemble support d'épissures (144) peut être retiré du module à fibres optiques (64').

4. Module à fibres optiques selon l'une quelconque des revendications 1 à 3, comprenant en outre une languette de retenue (134) positionnée sur un côté du module à fibres optiques, où le premier support de composant (132) est espacé du côté du module à fibres optiques de manière à ce qu'un canal de routage de fibre (136) soit pourvu entre le premier support de composant (132) et la languette de retenue (134).

5. Module à fibres optiques selon l'une quelconque des revendications 1 à 4, comprenant en outre une pluralité de guides de gestion de fibres (142) disposés sur un périmètre extérieur de l'intérieur (68') du module à fibres optiques (64').

6. Module à fibres optiques selon l'une quelconque des revendications 1 à 5, comprenant en outre un élément de contrôle de rayon de courbure (146) fixé à l'intérieur (68') du module à fibres optiques (64').

7. Module à fibres optiques selon la revendication 6, dans lequel l'élément de contrôle de rayon de courbure (146) est configuré pour permettre le routage des fibres à l'intérieur (68') du module à fibres optiques et pour offrir un rayon de courbure compris entre environ 20 mm et 25 mm.

8. Module à fibres optiques selon l'une quelconque des revendications 1 à 7, dans lequel le support d'épissures de fibres en ruban (154) comprend au moins une languette (160) configurée pour retenir une épissure de fibre en ruban en permettant un ajustement par friction de l'épissure de fibre en ruban.

9. Module à fibres optiques selon la revendication 8, dans lequel l'au moins une languette (160) est formée sous la forme d'un doigt incurvé vers le bas formant un arc, et au moins une languette présente au moins une surface lisse arrondie configurée pour retenir l'épissure de fibre en ruban dans l'élément support d'épissures de fibres en ruban sans pincer ni endommager l'épissure de fibres de ruban.

10. Module à fibres optiques selon l'une quelconque des revendications 5 à 9, dans lequel au moins un guide de gestion de fibres (142) de la pluralité de guides de gestion de fibres est formé sous la forme d'un doigt incurvé vers le bas formant un arc, et l'au moins un guide de gestion de fibres (142) présente au moins une surface lisse arrondie configurée pour retenir un composant de fibre optique sans pincer ni endommager le composant de fibre optique.

11. Module à fibres optiques selon l'une quelconque des revendications 1 à 10, dans lequel l'ensemble support d'épissures (144) est configuré pour permettre une gestion de fibres pour au moins un élément parmi un faisceau de fibres épissé à un câble ruban par une première épissure de fibres en ruban et une pluralité de nattes de fibres.
